Europäisches Patentamt

European Patent Office

Office européen des brevets

(19)

(11) **EP 0 570 839 B1**

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int Cl.6: **H02J 3/01**, H02J 3/18, H02M 1/12, G05F 1/32

(21) Anmeldenummer: **93107782.0**

(22) Anmeldetag: **13.05.1993**

(54) **Schaltungsanordnung zur Kompensation von Spannungsabfällen an Versorgungsleitungen bzw. zur Minderung der Oberwellen des Stromes**

Voltage drop compensating and current harmonics reducing circuit on the feed lines

Circuit de compensation de chute de tension sur les lignes d'alimentation et pour la réduction des ondes harmoniques du courant électrique

(84) Benannte Vertragsstaaten:
CH DE FR LI NL

(30) Priorität: **22.05.1992 HU 170592**

(43) Veröffentlichungstag der Anmeldung:
**24.11.1993 Patentblatt 1993/47**

(73) Patentinhaber:
• **DELTRONIC IPARI ELEKTRONIKUS KESZÜLEK FEJLESZTÖ ES GYARTO KFT.**
H-1103 Budapest (HU)
• **DE DRIE ELECTRONICS B.V.**
NL-6710 BB Ede (NL)

(72) Erfinder:
• **Járdán, Kálmán R., Dr.**
H-1025 Budapest (HU)
• **Ruumpol, Gert J.**
NL-7384 AB Wilp (NL)

(74) Vertreter: **Tergau, Enno, Dipl.-Ing. et al**
Mögeldorfer Hauptstrasse 51
90482 Nürnberg (DE)

(56) Entgegenhaltungen:
**EP-A- 0 335 626**

• **CONFERENCE RECORD OF THE 1990 IEEE INDUSTRY APPLICATIONS SOCIETY ANNUAL MEETING, 7. Oktober 1990, WASHINGTON Seiten 1107 - 1112 FUJITA ET AL 'a practical approach to harmonic compensation in power systems -series connection of passive and active filters'**
• **18TH ANNUAL IEEE POWER ELECTRONICS SPECIALISTS CONFERENCE, 1987, BLACKSBURG,VIRGINIA Seiten 482 - 490 SCHOOR ET AL 'a study of a system of current fed converters as an active three phase filter'**
• **THIRD ANNUAL IEEE APPLIED POWER ELECTRONICS CONFERENCE AND EXPOSITION, 1. Februar 1988, NEW ORLEANS Seiten 267 - 277 MORAN ET AL 'analysis and design of a novel 3-phi solid-state power factor compensator and harmonic suppressor system'**
• **CONFERENCE RECORD OF THE 1989 IEEE INDUSTRY APPLICATIONS SOCIETY ANNUAL MEETING, 1. Oktober 1989, SAN DIEGO,CALIFORNIA Seiten 947 - 951 MORAN 'a line voltage regulator/conditioner for harmonic-sensitive load isolation'**

## Beschreibung

Die Erfindung bezieht sich auf eine Schaltungsanordnung zur Kompensation von Spannungsabfällen an Versorgungsleitungen bzw. zur Minderung der Oberwellen des Stromes mit den Merkmalen des Oberbegriffs des Anspruches 1 oder mit den Merkmalen des Oberbegriffs des Anspruchs 2.

Wie es allgemein bekannt ist, bedeutet der Spannungsabfall, der an Beförderungsleitungen infolge des Stromes entsteht, bei der Beförderung und Verteilung der elektrischen Energie ein wesentliches praktisches Problem.

Der Spannungswert an den Verbrauchern muß dem Charakter der Verbraucher angepassten Toleranzen entsprechen, sonst kann der Verbraucher nicht seiner Bestimmung entsprechend arbeiten. Für passive Verbraucher muss allgemein der Mittelwert oder Effektivwert der Spannung unter entsprechenden Grenzen gehalten werden, einige Verbraucher ertragen jedoch auch binnen der Toleranzen nur langsame Veränderungen. Ein typisches Beispiel dafür ist die Speisung von Glühlampen, wo schnelle Veränderungen nur mit verhältnismässig geringen Amplituden zulässig sind. Empfindlichere elektronische Einrichtungen stellen erhöhte Anforderungen der elektrischen Energieversorgung gegenüber. Dies kann engere Spannungstoleranzen bedeuten, und auch den transienten Spannungsveränderungen gegenüber werden viel strengere Anforderungen gestellt.

Als weitere Probleme der elektrischen Energieverteilung sind festzustellen, einerseits, daß die Grundwelle des Verbraucherstromes eine phasenmäßige Verschiebung gegenüber der Netzspannung aufweist ( cos $\phi < 1$ ), anderseits, daß der Verbraucherstrom neben seiner Grundwelle auch Oberwellen verschiedener Ordnung enthält.

Geringe Werte des Leistungsfaktors und Stromoberwellen verursachen zusätzliche Verluste, und reduzieren damit die an einer vorhandenen Leitung übertragbare Leistung. Oberwellen des Stromes verzerren dabei noch die Wellenform der Verbraucherspannung, das bei elektronischen Verbrauchern Funktionsstörungen herbeiführen kann.

In Netzwerken, die unter Spannungen höherer Frequenz (z.B. 400Hz) arbeiten, kann der Spannungsabfall an den Versorgungsleitungen zu ernsthaften Schwierigkeiten führen. In solchen Fällen kann die elektrische Energie auch über kleinere Entfernungen nur mit Sonderkabel großen Querschnitts und komplizierter Konstruktion befördert werden, die eine sehr kostspielige Lösung darstellt.. ( Solche Systeme werden z.B. an Flughäfen betrieben. )

Zur Kompensation der an den Leitungen entstehenden Spannungsabfälle sind verschiedene Lösungen erarbeitet geworden. Einrichtungen, die auf dem Prinzip der Ferroresonanz arbeiten, werden zum Beispiel seit mehreren Jahrzehnten eingesetzt. Diese Lösung hat den Nachteil, daß verhältnismäßig grosse reaktive Leistungen eingebaut werden müßen, sodaß sie für größere Leistungen kaum mehr gebraucht wird.

Eine andere, auch in der heutigen Praxis häufig verwendete Methode der Kompensation des Spannungsabfalles besteht darin, daß ein Kondensator zu der Leitung in eine Reihenschaltung eingefügt wird (wie dies in Fernleitungen hoher Betreibsspannungen üblich ist), oder ein Transformator mit seiner Primärwicklung zu der Leitung in eine Reihenschaltung eingefügt wird, wobei die Sekundärwicklung desselben Transformators an einen Kondensator angeschlossen wird. So kann der Kondesator, bzw. seine auf die Primärseite reduzierte kapazitive Reaktanz bei entsprechender Bemessung die induktive Reaktanz der Leitung kompensieren. Der Nachteil dieser Lösung besteht darin, daß der Spannungsabfall, der an dem ohmschen Widerstand der Leitung entsteht, auf dieser weise nicht kompensiert werden kann, sodaß um denselben zu reduzieren weit größere Leitungsquerschnitte eingebaut werden müßen, als dies aufgrund der thermischen Belastbarkeit erforderlich wäre, das wiederum eine oft recht kostspielige Maßnahme ist.

Die bisher beschriebenen Methoden eignen sich weder zur Besserung des Leistungsfaktors noch zur Minderung der Stromoberwellen.

Aus der Fachliteratur sind Lösungen bekannt, die unter Gebrauch von in inzwischengesetzten Energiespeichern (z.B. Kondensatoren) gespeicherter elektrischer Energie zur Kompensation der von nichtlinearen Verbrauchern erzeugten Stromoberwellen verwendbar sind. Eine solche Lösung wird z.B. in der Veröffentlichung von *Bhattacharya,S.-Divan,D.M.-Benerjee,B.: Synchronous Frame Harmonic Isolator Using Active Series Filter (Proc. of EPE, Firenze, 1991, pp.3030-035)* beschrieben, in der neben den aktiven Stromkreisen der Kompensierung auch passive Filterkreise eingesetzt werden. In anderen Veröffentlichungen werden Lösungen beschrieben, die dieselbe Aufgabe mit Gebrauch von Hilfsenergie lösen.

Diese Schaltungsanordnungen können im allgemeinen mit verwickeltem Aufbau, mit Einsatz zahlreicher, kostspieliger Schaltelemente und dem Bedarf einer komplizierten Ansteuerung charakterisiert werden.

Eine Schaltungsanordnung zur Stabilisierung der Ausgangsspannung gemäß Oberbegriff des Anspruches 1 ist in US-A-4 286 207 und in EP-A-0 335 626 beschrieben. In EP-A-0 335 626 ist zwischen Speisespannungsquelle und Verbraucher in Reihe zum Eingang ein antiparalleles Thyristorpaar geschaltet. Antiparallel geschaltete Thyristoren bilden ein bidirektionales, nur einschaltbares Schaltelement, sein Ausschalten erfolgt ausschließlich beim Nulldurchgang des Laststromes, dann aber selbsttätig. Weiterhin ist bei der vorbekannten Schaltungsanordnung ein Injektortransformator eingesetzt, dessen eine Wicklung zwischen Speisespannungsquelle und Verbraucher in Reihe geschaltet ist und dessen zweite Wicklung von der Eingangsspannung über ein zweites, in Reihe geschaltetes antiparalleles Thyristorpaar derart gespeist wird, daß die injektierte Spannung mit dem Zündverzugswinkel der Thyristoren eingestellt wird. Der Spannungsregler muß in beiden Richtungen eingreifen können. Bei der vorbekannten Schaltungsanordnung wird dies dadurch realisiert, daß die Ausgangsspannung durch Zündverzug des zum Eingang in Reihe geschalteten Thyristorpaares verringert werden kann und daß mit Hilfe des zur Wicklung des Injektortransformators in Reihe geschalteten Thyristorpaares dieselbe Ausgangsspannung erhöht werden kann. Um die Ausgangsspannung ebenso erhöhen wie auch reduzieren zu können, muß der Zündverzugswinkel in der Mitte des Arbeitsbereiches einen vorbestimmten, von der Breite des gewünschten Arbeitsbereiches abhängigen Wert haben.

Der Erfindung liegt die Aufgabe zugrunde, eine wesentlich einfachere und damit auch entsprechend wirtschaftlichere Lösung zur Kompensation von Spannungsabfällen zu erarbeiten.

Diese Aufgabe wird durch die Merkmalskombinationen der Ansprüche 1 und 2 gelöst.

Die Erfindung beruht auf folgender Erkenntnis: fügt man die Primärwicklung eines Transformators in das Versorgungsnetz in eine Reihenschaltung zwischen Stromquelle und Last ein, wobei die Sekundärwicklung desselben Transformators durch einen Schalter zwischen Phase und Null des Versorgungsnetzes angeschloßen wird, so wird bei dauernd geschloßenem Schalter eine der Über-(Unter-)setzung des Transformators entsprechende Spannung zur Spannung des Versorgungsnetzes addiert, bei dauernd offenem Schalter wird hingegen die Induktivität der Primärwicklung des Transformators zur Induktivität des Versorgungsnetzes in Reihe geschaltet, sodaß die Spannung an der Last kleiner als die des Versorgungsnetzes wird. Werden die Dauer der eingeschalteten bzw. abgeschalteten Zustände des Schalters einander gegenüber in entsprechendem Verhältnis gesteuert, so kann an den Lastklemmen immer die Spannung gewünschter Größe hergestellt werden. Wird die Frequenz der Schalthandlungen weiterhin 50 bis 100 mal höher (oder auch noch höher) der Frequenz der Versorgungsspannung gegenüber gewählt, so kann die Spannung an den Lastklemmen nicht nur im Mittelwert oder Effektivwert sondern auch binnen ihrer Periode eine Führungsgröße folgen, praktisch also normalerweise sinusvörmig bleiben.

Erfindungsgemäß wird/werden zwischen Phasenausga(e)ng(e) des Versorgungsnetes und Lastimpedanz Primärwicklung(en) von Transformator(en) eingefügt, wobei eine Zuleitung(en) der (einzelnen) Sekundärwicklung(en) an Phasenausga(e)ng(e) des Versorgungsnetzes und andere Zuleitung(en) direkt oder mittelbar über einphasige Schaltmatrix(e) an den neutralen Punkt des Versorgungsnetzes angeschloßen ist/sind, oder über eine dreiphasige Schaltmatrix miteinander verbunden sind.

Die Erfindung wird weiterhin anhand der an den Abbildungen dargestellten Ausführungsbeispielen ausgelegt.

An der 1. Abbildung wird eine einem Ausführungsbeispiel der Erfindung entsprechende Schaltungsanordnung gezeigt, für ein einphasiges Versogungsnetz.

An der 2. Abbildung wird ein anderes Ausführungsbeispiel der Erfindung gezeigt, für ein dreiphasiges Versorgungsnetz.

An der 3. Abbildung wird ein weiteres Ausführungsbeispiel der Erfindung gezeigt, ebenfalls für ein dreiphasiges Versorgungsnetz.

An der 4. Abbildung wird ein Beispiel einer einphasigen Schaltmatrix gezeigt.

An der 5. Abbildung wird ein Beispiel einer dreiphasigen Schaltmatrix gezeigt.

An der 6. Abbildung wird als Beispiel ein Schaltelement, das mit einem Bipolartransistor isolierter Basis (IGBT) und einer dazu parallel geschalteten Diode realisiert wurde, gezeigt.

An den 7., 8. und 9. Abbildungen werden Strombzw. Spannungsverläufe gezeigt, die die Funktionsweise einer erfindungsgemäßen Schaltungsanordnung charakterisieren.

In der Schaltungsanordnung gemäß der 1. Abbildung sind die Klemmen 0,P1 einer einphasigen Stromquelle über das Versorgungsnetzwerk ZL an die Eingangsklemmen P2,P4 des elektronischen Spannungs- und/oder Stromkompensators ELDC angeschloßen. Die resultierende Impedanz des Versorgungsnetzes ZL wird aus den Induktivitäten L0, L1 und Widerständen R0, R1 desselben Netzes ZL zusammengesetzt. Die Ausgangsklemmen P3,P5 des Kompensators ELDC sind an die Zuleitungen der Lastimpedanz LD angeschloßen. Die Primärwicklung PR des Transformators TR im Kompensator ELDC ist zwischen der Eingangsklemme P2 und der Ausgangsklemme P3 desselben Kompensators ELDC angeschloßen, wobei die Sekundärwicklung SR desselben Transformators TR direkt oder über den Filterkreis F und weiterhin über die einphasige Schaltmatrix SM1 an die Eingangsklemme P4 des Kompensators ELDC angeschloßen ist.

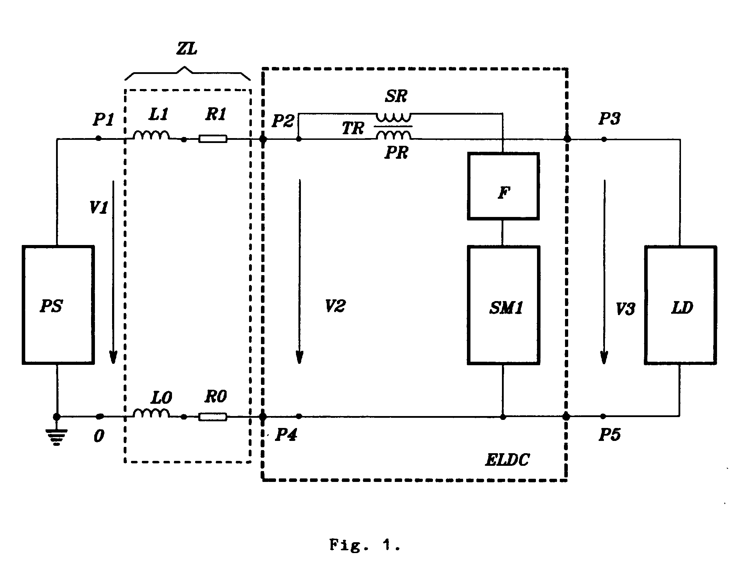

Die Schaltungsanordnung gemäß Abbildung 1. kann auf der nachfolgend beschriebenen Weise betrieben werden:

Der Verbraucher der mit der Impedanz LD gezeichnet wird, wird von der einphasigen Stromquelle PS versorgt. Da an der resultierenden Impedanz des Versorgungsnetzes ZL ein Spannungsabfall entsteht, vermindert die vorhandene Spannung sich von der Ausgangspannung V1 der Stromquelle PS bis zu den Eingangsklemmen P2, P4 des Kompensators ELDC auf den Spannungswert V2. Die Schaltmatrix SM1 entspricht bezüglich ihrer prinzipiellen Funktion einem idealisierten Schalter. Erfindungsgemäß erfolgen Ein- und Ausschaltungen der Schaltmatrix SM1 zu einer im vergleich zur Grundwelle der Stromquelle PS erhöhten, beispielsweise 50...100-fach erhöhten Frequenz. Das zeitliche Verhältnis der eingeschalteten bzw. abgeschalteten Zustände und damit die relative Pulsbreite PW wird durch einen, zur Schaltungsanordnung gehörigen elektronischen Steuerteil der gewünschten Ausgangsspannung V3 entprechend bestimmt.

Bleibt die einphasige Schaltmatrix SM1 dauernd im eingeschalteten Zustand, so wird eine der Untersetzung N1/N2 des Transformators TR entsprechende Spannung zur Spannung V2 addiert, wodurch die Ausgangsspannung V3 an den Ausgängen des Kompensators ELDC erhöht wird, und zwar auf den Wert

$$V3 = (1+N1/N2)xV2 .$$

Bleibt die einphasige Schaltmatrix SM1 dauernd im ausgeschalteten Zustand, so ist die Induktivität der Primärwicklung PR des Transformators TR in die Reihe zu den Induktivitäten L0, L1 des Versorgungsnetzes geschaltet, sodaß die Ausgangsspannung V3 kleiner als die Eingangsspannung V2 wird. Dies bedeutet, daß die Spannung mit dieser Schaltungsanordnung nicht nur erhöht sondern auch vermindert werden kann, das von besonderer praktischer Bedeutung ist.

Durch die Betätigung der einphasigen Schaltmatrix SM1 kann die relative Pulsbreite PW verändert und die Spannung V3 die am Verbraucher erscheint genau auf einen vorgegebenen Wert gestellt werden. Da die Schaltfrequenz der einphasigen Schaltmatrix SM1 im Vergleich zur Frequenz der Stromquelle PS um etwa zwei Größenordnungen höher liegt, mit anderen Worten also, da die einphasige Schaltmatrix SM1 50 bis 100 mal binnen einer Periode der Spannung der Stromquelle PS geschaltet wird, kann es wohl erzielt werden, daß die Spannung V3 nicht nur den gewünschten Mittelwert oder Effektivwert hat, sondern auch binnen jeder Periode eine vorgegebene Führungsgröße folgt, also z.B. sinusförmigen Wellenverlauf hat.

Die in der Primärwicklung PR des Transformators TR induzierte Spannnung hat auch der Schaltfrequenz entsprechende hochfrequente Komponente, die unterdrückt werden müßen. Diese Art Siebung kann entweder an der primären oder an der sekundären (eventuell gleichzeitig an beiden) Seite(n) erledigt werden.

Im Ausführungsbeispiel gemäß Abbildung 1. wird die Siebung mit einem, zu der Sekundärwicklung SR in die Reihe geschalteten Filterkreis F an der sekundären Seite vorgenommen. Die Siebung an der Sekundärseite hat den Vorteil, daß der Transformator keine hochfrequente Komponente übertragen muss, also einfach auf die Grundwellen von Strom und Spannung ausgelegt werden kann.

Es kann gezeigt werden, daß die erforderliche Typenleistung des Kompensators ELDC zum Mass der erwünschten Kompensierung proportional ist. Ist z.B. nur Spannungsabfall zu kompensieren im Bereich von +-10%, so beträgt die erforderliche Typenleistung des Kompensators ELDC etwa 10% der Verbraucherleistung.

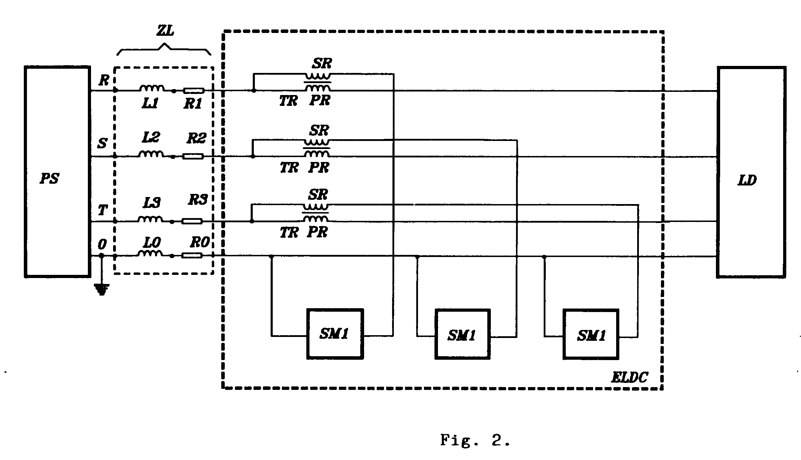

Im Ausführungsbeispiel gemäß Abbildung 2. sind die Zuleitungen R, S, T, 0 der dreiphasigen Stromquelle PS über das Versorgungsnetz ZL, dessen Impedanz mit den Induktivitäten L1, L2, L3, L0 und mit den Widerständen R1, R2, R3, R0 beschrieben wird, an den Kompensator ELDC angeschlossen. In jeder der drei Phasenleitungen des Kompensators ELDC ist je eine Primärwicklung eines der drei Transformatoren TR in je eine Reihenschaltung eingefügt, wobei die Sekundärwicklungen SR der Transformatoren TR direkt oder mittelbar über je einen Filterkreis F und weiterhin über je eine einphasige Schaltmatrix SM1 an die diesmal geerdete neutrale Leitung des Versorgungsnetzes ZL angeschloßen sind. Diese Schaltungsanordnung enthält im Wesentlichen drei einphasige Schaltungsanordnungen. Die Funktionsweise der zu den einzelnen Phasen gehörigen Stromkreise stimmt mit der früheren Beschreibung völlig überein.

In dieser Schaltungsanordnung können die Spannungen bzw. die Oberwellengehalte der einzelnen Phasen voneinander unabhängig kompensiert werden, da die zu den einzelnen Phasen gehörigen Stromkreise aufeinander gegenseitig nicht einwirken.

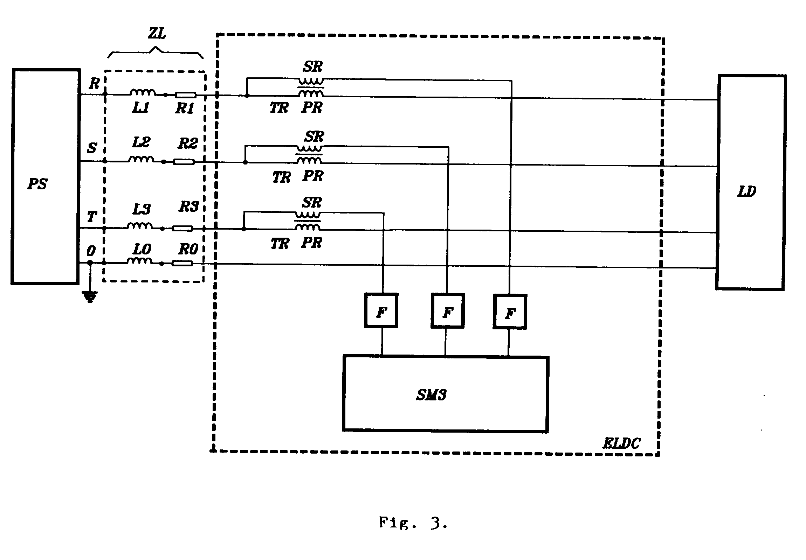

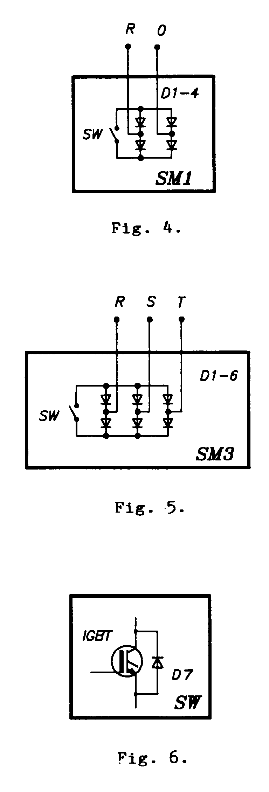

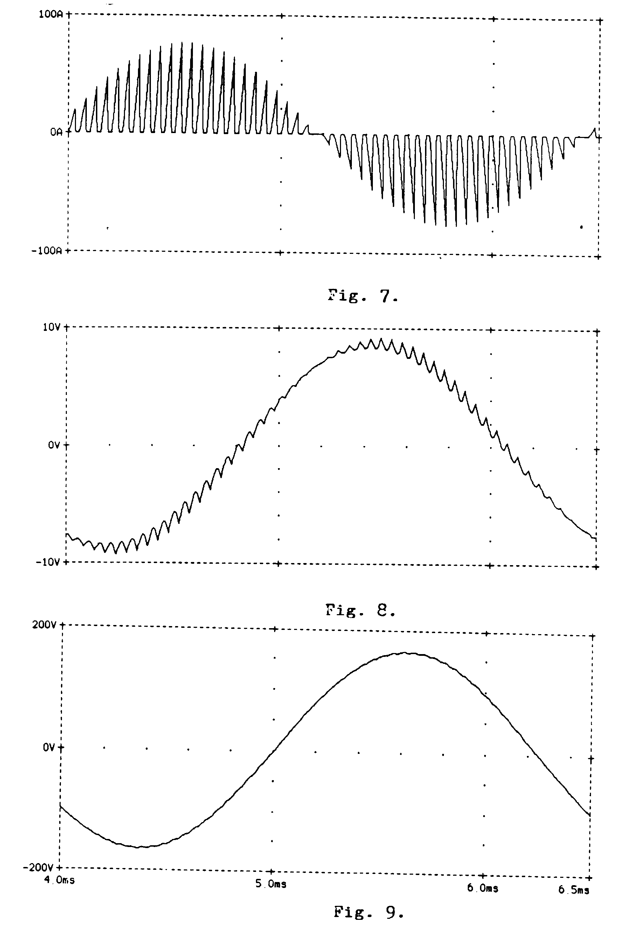

Sind Last und Netzimpedanzen symmetrisch, so kann die Kompensierung der Phasenspannungen in der Anordnung gemäß Abbildung 3. mit Hilfe der dreiphasigen Schaltmatrix SM3, die nur ein einziges Schaltelement enthält, vorgenommen werden.

An der 4. Abbildung wird ein Ausführungsbeispiel der einphasigen Schaltmatrix SM1 gezeigt. Dieses Ausführungsbeispiel enthält eine aus den Dioden D1, D2, D3, D4 bestehende Brückenschaltung, in derem Überbrückungszweig sich ein Halbleiterschaltelement SW befindet. In der dreiphasigen Schaltmatrix SM3, die an der 5. Abbildung gezeigt ist, ist eine, aus den Dioden D1, D2, D3, D4, D5, D6 bestehende dreiphasige Brückenschaltung enthalten, in derem Überbrückungszweig sich ein Halbleiterschaltelement SW befindet. An der 6. Abbildung ist ein Ausführungsbeispiel des Halbleiterschaltelementes SW gezeigt, das aus einem Bipolartransistor isolierter Basis (IGBT) und einer, zwischen dessen Emitter und Kollektor geschalteten Diode D7 besteht.

An den 7., 8. und 9. Abbildungen werden aus rechnerischer Simulation erhaltene Strom- bzw. Spannungsverläufe gezeigt, in denen die Frequenz der Grundwelle 400Hz, die relative Pulsbreite PW 60% und die Verbraucherleistung (in den drei Phasen insgesamt) 60kVA beträgt. An der 7. Abbildung wird der Strom der einphasigen Schaltmatrix SM1, an der 8. Abbildung die Spannungsdifferenz V3-V2, und an der 9. Abbildung die Ausgangsspannung V3 gezeigt. Die Frequenz der Schalthandlungen beträgt 50 mal die Frequenz der Grundwelle. Es ist klar ersichtlich, daß der Wellenverlauf der Ausgangsspannung V3 nahe der Sinusform liegt, und der Mittelwert derselben Ausgangsspannung V3 dem gewünschten Mittelwert entspricht.

Die erfindungsgemäße Problemlösung ergibt einen einfachen Aufbau, der in einer einfachen Weise gesteuert werden kann, und sie ermöglicht dabei, daß die Spannung der Verbraucher mit ihrer Hilfe stabilisiert, und bei Bedarf der Oberwellengehalt des Stromes gleichzeitig kompensiert wird.

Die Stabilisierung der Verbraucherspannung kann nicht nur die Regelung deren Mittelwertes oder Effektivwertes, sondern auch die Korrektion ihrer Verzerrungen (Abweichungen von der Sinusform) bedeuten.

**Patentansprüche**

1. Schaltungsanordnung zur Kompensation von Spannungsabfällen an Versorgungsleitungen bzw. zur Minderung des Oberwellengehaltes des Stromes,

   - mit einem Versorgungsnetzwerk (ZL), welches als aus Induktivitäten (L0-L3) und Widerständen (R0-R3) bestehende Impedanz darstellbar ist,
   - mit einem elektronischen Spannungs- und/ oder Stromkompensator (ELDC),

     -- dessen Eingangsklemmen (P2, P4) über das Versorgungsnetzwerk (ZL) an eine Wechselstromquelle (PS) angeschlossen sind und
     -- dessen Ausgangsklemmen (P3, P5) an eine Lastimpedanz (LD) angeschlossen sind,

   - mit einem im Kompensator (ELDC) angeordneten Transformator (TR) je Phase derart,

     -- daß seine Primärwicklung (PR) zwischen Phasenausgang des Versorgungsnetzwerkes (ZL) und Lastimpedanz (LD) in Reihe geschaltet ist und
     -- daß seine Sekundärwicklung (SR) mit einem ersten Leitungsanschluß an denselben Phasenausgang des Versorgungsnetzwerkes (ZL) angeschlossen ist, und

   - mit einem zwischen dem zweiten Leitungsanschluß der Sekundärwicklung (SR) und einem neutralen Punkt (0) des Versorgungsnetzwerkes (ZL) in Reihe geschalteten bidirektionalen Schaltelement,

     dadurch gekennzeichnet,
     daß das als einphasige Schaltmatrix (SM1) wirksame Schaltelement zu beliebigen Zeitpunkten binnen einer Periode der Spannung der Wechselstromquelle (PS) einschaltbar und ausschaltbar ist.

2. Schaltungsanordnung zur Kompensation von Spannungsabfällen an Versorgungsleitungen bzw. zur Minderung des Oberwellengehaltes des Stromes,

   - mit einem Versorgungsnetzwerk (ZL), welches als aus Induktivitäten (L0-L3) und Widerständen (R0-R3) bestehende Impedanz darstellbar ist,
   - mit einem elektronischen Spannungs- und/ oder Stromkompensator (ELDC),

     -- dessen Eingangsklemmen (P2, P4) über das Versorgungsnetzwerk (ZL) an eine Wechselstromquelle (PS) angeschlossen sind und
     -- dessen Ausgangsklemmen (P3, P5) an eine Lastimpedanz (LD) angeschlossen sind,

   - mit einem im Kompensator (ELDC) angeordneten Transformator (TR) je Phase derart,

     -- daß seine Primärwicklung (PR) zwischen Phasenausgang des Versorgungsnetzwerkes (ZL) und Lastimpedanz (LD) in Reihe geschaltet ist und
     -- daß seine Sekundärwicklung (SR) mit einem ersten Leitungsanschluß an denselben Phasenausgang des Versorgungsnetzwerkes (ZL) angeschlossen ist,

     dadurch gekennzeichnet,

   - daß die Wechselstromquelle (PS) dreiphasig ist und
   - daß die zweiten Leitungsanschlüsse der Sekundärwicklungen (SR) an ein bidirektionales Schaltelement angeschlossen und dadurch miteinander elektrisch verbindbar sind, wobei das als dreiphasig Schaltmatrix (SM3) wirksame Schaltelement zu beliebigen Zeitpunkten binnen einer Periode der Spannung der Wechselstromquelle (PS) einschaltbar und ausschaltbar ist.

3. Schaltungsanordnung nach Anspruch 1, dadurch gekennzeichnet, daß das Schaltelement eine aus vier Dioden (D1-D4) bestehende einphasige Brückenschaltung und im Überbrückungszweig der Brückenschaltung ein ein-und abschaltbares Halbleiterschaltelement (SW) aufweist.

4. Schaltungsanordnung nach Anspruch 2, dadurch gekennzeichnet, daß das Schaltelement eine aus sechs Dioden (D1-D6) bestehende dreiphasige Brückenschaltung und im Überbrückungszweig der Bückenschaltung ein ein- und abschaltbares Halbleiterschaltelement (SW) aufweist.

5. Schaltungsanordnung nach Anspruch 3 oder 4, dadurch gekennzeichnet, daß das Halbleiterschaltelement (SW) ein herkömmlicher Bipolartransistor, ein Bipolartransistor mit isolierter Basis (IGBT) oder ein MOSFET ist.

6. Schaltungsanordnung nach einem der Ansprüche 1-5, dadurch gekennzeichnet, daß ein Filterkreis (F) mit der Sekundärwicklung (SR) des Transformators (TR) in Reihe geschaltet ist.

7. Schaltungsanordnung nach einem der Ansprüche 1-6, dadurch gekennzeichnet, daß ein Filterkreis (F) mit der Primärwicklung (PR) des Transformators (TR) parallel geschaltet ist.

**Claims**

1. A circuit for compensation of voltage drops in power supply lines, as well as reducing higher harmonic content of the current,

   - with a supply network (ZL), the impedance of which is represented by inductors (L0-L3) and resistors (R0-R3),
   - connected to an electronic voltage or current compensator (ELDC), whilst

     -- the input terminals (P2,P4) of the power supply network (ZL) are connected to an alternating power source (PS) and
     -- its output terminals (P3,P5) are connected to a load-impedance (LD)

   - with a transformer (TR) in each phase of the compensator (ELDC), connected in such a way

     -- that its primary winding (PR) is connected in series between the phase output of the power supply network (ZL) and the load impedance (LD) and
     -- its secondary winding (SR) is connected through a current path to the same phase-output of the power supply network (ZL) and

   - a bi-directional switching means is connected in series between the secondary winding (SR) and the neutral point (0) of the power source network (ZL) through a second current path

   characterized in that
   the switching means, functioning as a single-phase switching matrix (SM1), can be turned on and off at any desired instant within the period of the voltage of the alternating power source (PS).

2. A circuit for compensation of voltage drops in power supply lines, as well as reducing higher harmonic content of the current,

   - with a supply network (ZL), the impedance of which is represented by inductors (L0-L3) and resistors (R0-R3),
   - connected to an electronic voltage or current compensator (ELDC), whilst

     -- the input terminals (P2,P4) of the power supply network (ZL) are connected to an alternating power source (PS) and
     -- its output terminals (P3,P5) are connected to a load-impedance (LD)

   - with a transformer (TR) in each phase of the compensator (ELDC); connected in such a way

     -- that its primary winding (PR) is connected in series between the phase output of the power supply network (ZL) and the load impedance (LD) and
     -- its secondary winding (SR) is connected through a current path to the same phase-output of the power supply network (ZL),

   characterized in that
   the alternating power source (PS) is of three phase construction and that the second terminal of the secondery winding (SR) is connected to a bi-directional switching means, wherein the bi-directional swiching means is functioning as a three phase swiching matrix (SM3), turned on and off any desired instant within the period of the voltage of the alternating power source (PS).

3. A circuit according to claim 1, characterized in that
   the switching means consists of a single-phase bridge of four dices (D1-D4) with a semiconductor switch (SW), connected to the DC side of the bridge, that can be turned on and off.

4. A circuit according to claim 2, characterized in that
   the switching means consists of a three-phase bridge of six diodes (D1-D6) with a semiconductor switch (SW), connected to the DC side of the bridge, that can be turned on and off.

5. A circuit according to claim 3 or claim 4,

characterized in that
the semiconductor switch (SW) is a normal bipolar transistor, an isolated gate bipolar transistor (IGBT) or a MOSFET.

6. A circuit according to any of claims 1 to 5,
    characterized in that
    the filter circuit (F) is connected in series with the secondary winding (SR) of the transformer.

7. A circuit according to any of claims 1 to 6,
    characterized in that
    the filter circuit (F) is connected in parallel with the primary winding (PR) of the transformer.

## Revendications

1. Circuit de compensation de chutes de tension sur des lignes d'alimentation et de réduction des harmoniques du courant,

    - équipé d'un réseau de distribution (ZL), pouvant être représenté sous la forme d'une impédance se composant d'inductances (L0-L3) et de résistances (R0-R3),
    - équipé d'un compensateur électronique de tension et/ou de courant (ELDC),
    - dont les bornes d'entrée (P2, P4) sont reliées par l'intermédiaire du réseau de distribution (ZL) à une source de courant alternatif (PS) et
    - dont les bornes de sortie (P3, P5) sont reliées à une impédance de charge (LD),
    - équipé d'un transformateur (TR) disposé dans le compensateur (ELDC) pour chaque phase, de telle sorte que
    - son enroulement primaire (PR) est disposé en série entre la sortie de phase du réseau de distribution (ZL) et l'impédance de charge (LD) et
    - son enroulement secondaire (SR) est relié par une première borne de ligne à la même sortie de phase du réseau de distribution (ZL), et
    - équipé d'un élément de commutation bidirectionnel monté en série entre la seconde borne de ligne de l'enroulement secondaire (SR) et un point neutre (0) du réseau de distribution (ZL),

    caractérisé en ce que l'élément de commutation agissant en tant que matrice de commutation monophasée (SM1) peut être rendue conductrice et non conductrice à des instants quelconques à l'intérieur d'une période de la tension de la source de courant alternatif (PS).

2. Circuit de compensation de chutes de tension sur des lignes d'alimentation et de réduction des harmoniques du courant,

    - équipé d'un réseau de distribution (ZL), pouvant être représenté sous la forme d'une impédance constituée d'inductances (L0-L3) et de résistances (R0-R3),
    - équipé d'un compensateur électronique de tension et/ou de courant (ELDC),
    - dont les bornes d'entrée (P2, P4) sont reliées par l'intermédiaire du réseau de distribution (ZL) à une source de courant alternatif (PS) et
    - dont les bornes de sortie (P3, P5) sont reliées à une impédance de charge (LD),
    - équipé d'un transformateur (TR) disposé dans le compensateur (ELDC) pour chaque phase de telle sorte que,
    - son enroulement primaire (PR) est monté en série entre la sortie de phase du réseau de distribution (ZL) et l'impédance de charge (LD) et
    - son enroulement secondaire (SR) est relié par une première borne de ligne à la même sortie de phase du réseau de distribution (ZL),

    caractérisé en ce que

    - la source de courant alternatif (PS) est triphasée et
    - les secondes bornes de ligne des enroulements secondaires (SR) sont reliées à un élément de commutation bidirectionnel et peuvent ainsi être reliées électriquement entre elles, l'élément de commutation agissant en tant que matrice de commutation triphasée (SM3) pouvant être rendu conducteur et non conducteur à des instants quelconques à l'intérieur d'une période de la tension de la source de courant alternatif (PS).

3. Circuit selon la revendication 1, caractérisé en ce que l'élément de commutation comporte un circuit en pont monophasé se composant de quatre diodes (D1-D4) et dans la branche de dérivation du circuit de pont, d'un élément semiconducteur (SW) pouvant être rendu conducteur et non conducteur.

4. Circuit selon la revendication 2, caractérisé en ce que l'élément de commutation comporte un circuit en pont triphasé se composant de six diodes (D1-D6) et dans la branche de dérivation du circuit en pont, d'un élément de commutation semiconducteur (SW) pouvant être rendu conducteur et non conducteur.

5. Circuit selon la revendication 3 ou 4, caractérisé en ce que l'élément de commutation semiconducteur (SW) est un transistor bipolaire classique, un transistor bipolaire à grille isolée (IGBT) ou un MOSFET.

6. Circuit selon l'une des revendications 1 à 5, caractérisé en ce qu'un filtre (F) est disposé en série avec l'enroulement secondaire (SR) du transformateur (TR).

7. Circuit selon l'une des revendications 1 à 6, caractérisé en ce qu'un filtre (F) est disposé en parallèle avec l'enroulement primaire (PR) du transformateur (TR).

Fig. 1.

Fig. 2.

Fig. 3.

Fig. 4.

Fig. 5.

Fig. 6.

Fig. 7.

Fig. 8.

Fig. 9.